# EUROPÄISCHE PATENTSCHRIFT

(11) **EP 0 508 490 B1**
(45) Veröffentlichungstag und Bekanntmachung des Hinweises auf die Patenterteilung: **22.03.1995**
(21) Anmeldenummer: 92108217.8
(22) Anmeldetag: 15.05.1992
(51) Int. Cl.: C08G 77/06, C08G 77/08, C08G 77/16, C08G 77/20

(54) **Verfahren zur Herstellung von Organo(poly)siloxanen**
Process for preparing organopolysiloxanes
Procédé de préparation d'organo(poly)siloxanes

(30) Priorität: 16.05.1991 DE 4116014
(43) Veröffentlichungstag der Anmeldung: 14.10.1992
(73) Patentinhaber: WACKER-CHEMIE GMBH, D-81737 München (DE)
(72) Erfinder: Stepp, Michael, Dr., W-8263 Burghausen (DE); Müller, Johann, W-8263 Burghausen (DE); Schöfberger, Silvia, W-8342 Reut (DE)

(56) Entgegenhaltungen:
- EP-A- 0 331 753
- GB-A- 959 144
- JP-A- 1 098 631
- POLYMER SCIENCE USSR. Bd. 26, Nr. 9, 1984, OXFORD GB Seiten 2226 - 2231; P.L.PRIKHOD'KO ET AL.: 'Polymerization of hexamethylcyclotrisiloxane bytetramethylammonium fluoride in the presence of hydroxyl-containing compounds'
- CHEMICAL ABSTRACTS, vol. 101, no. 10, 3. September 1984, Columbus, Ohio, US; abstract no. 73186D
- PATENT ABSTRACTS OF JAPAN vol. 13, no. 313 (C-618)(3661) 17. Juli 1989 ; & JP-A-1098631
- J. Yamawaki et al., Chemistry Letters 7 (1979) 755-758

## Beschreibung

Die Erfindung betrifft ein Verfahren zur Herstellung von Organo(poly)siloxanen, die jeweils an einem Molekülkettenende eine Si-gebundene Hydroxylgruppe aufweisen.

Aus US-A 3 445 426 (entspricht DE-AS 1 720 496) ist die Polymerisation von Hexaorganocyclotrisiloxan in Gegenwart von katalytischen Mengen eines fünffach koordinierten Siliciumkatalysators, eines Alkali-, Ammonium- oder Phosphoniumsiliconats, und mindestens Spuren eines Sil(ox)anols bekannt. Der Katalysator ist aber schwer zugänglich und empfindlich gegen Feuchtigkeit.

In EP-A 331 753 ist die Polymerisation von Hexaorganocyclotrisiloxanen in Gegenwart von Sil(ox)anolen und mit Hilfe von Alkalisil(ox)anolaten als Polymerisationsinitiatoren beschrieben. Alkalisil(ox)anolate weisen ebenfalls eine Feuchtigkeitsempfindlichkeit auf.

Aus EP-A 338 577 ist die Polymerisation von Hexamethylcyclotrisiloxan in Gegenwart von Trialkylsilanol und eines Lithium-Katalysators, wie Butyllithium, bekannt. Der Einsatz von metallorganischen Verbindungen ist sicherheitstechnisch problematisch.

In P.L. Prikhod'ko et al., POLYMER SCIENCE USSR 26 (1984) 2226-2231, wird ein Verfahren zur Polymerisation von Hexamethylcyclotrisiloxan in der Gegenwart von Tetramethylammoniumfluorid und Trimethylsilanol beschrieben.

In J. Yamawaki et al., Chemistry Letters 7 (1979), 755-758, wird die O-Alkylierung von Alkoholen, beispielsweise die O-Methylierung von Phenol durch Umsetzung von Phenol mit Methyljodid in Gegenwart eines an ein Trägermaterial gebundenen Kaliumfluorids, wie an Aluminiumoxid gebundenes Kaliumfluorid, beschrieben.

In JP-A-1-98 631 wird ein Cyclopolysiloxan anionisch in der Gegenwart eines Lithiumkatalysators und eines Triorganosilanols polymerisiert.

In L.M. Tartakovskaya et al., Vysokomol. Soedin. Ser. B 26, 234, 1984 (Chemical Abstracts Vol. 101, 73186d, 1984) ist die Ringöffnung und Polymerisation von cyclischen Siloxanen in Gegenwart von Fluorid-Ionen beschrieben.

Es bestand die Aufgabe ein Verfahren zur Herstellung von Organo(poly)siloxanen bereitzustellen, bei dem die oben genannten Nachteile vermieden werden durch Verwendung eines leicht zugänglichen und einfach handhabbaren Katalysators.

Gegenstand der Erfindung ist ein Verfahren zur Herstellung von Organo(poly)siloxanen der Formel

R¹R₂Si(OSiR₂)ₘ(OSiR₂)ₙOH ,

durch Umsetzung von Hexaorganocyclotrisiloxan der Formel

(R₂SiO)₃

mit Sil(ox)anol der Formel

R¹R₂Si(OSiR₂)ₘOH

wobei R gleich oder verschieden ist, einen einwertigen, gegebenenfalls substituierten Kohlenwasserstoffrest,
R¹ ein Wasserstoffatom oder einen einwertigen, gegebenenfalls substituierten Kohlenwasserstoffrest,
m 0 oder eine ganze Zahl von mindestens 1 und
n eine ganze Zahl von mindestens 3 bedeutet.
in Gegenwart eines polaren, aprotischen organischen Lösungsmittels und in Gegenwart eines Alkalimetallfluorid-Katalysator oder eines an ein Trägermaterial gebundenen Alkalimetallfluorid-Katalysators, mit der Maßgabe, daß, wenn ein Alkalimetallfluorid-Katalysator, der nicht an ein Trägermaterial gebunden ist, eingesetzt wird, ein Phasentransferkatalysator ausgewählt aus der Gruppe bestehend aus quarternären Ammoniumsalzen, Kronenethern, Polyethylenglykoldimethylethern, oder Zeolithen und ein tertiäres Amin mitverwendet wird.

Vorzugsweise bedeutet R einen einwertigen, gegebenenfalls substituierten Kohlenwasserstoffrest mit 1 bis 13 Kohlenstoffatom(en) je Rest.

Vorzugsweise bedeutet R¹ ein Wasserstoffatom oder einen einwertigen, gegebenenfalls substituierten Kohlenwasserstoffrest mit 1 bis 13 Kohlenstoffatom(en) je Rest.

Vorzugsweise ist m 0 oder eine ganze Zahl von 1 bis 3.

Vorzugsweise ist n eine ganze Zahl von 3 bis 999, bevorzugt von 9 bis 30.

Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste sind Halogenalkylreste, wie der 3,3,3-Trifluor-n-propylrest, 2,2,2,2',2',2'-Hexafluorisopropylrest, der Heptafluorisopropylrest; Halogenarylreste, wie der o-, m-, und p-Chlorphenylrest; und Acyloxyalkylreste, wie der Acetoxyethylrest und (Meth)acryloxypropylrest.

Beispiele für Kohlenwasserstoffreste R und substituierte Kohlenwasserstoffreste R gelten im vollen Umfang für Kohlenwasserstoffreste R¹ und substituierte Kohlenwasserstoffreste R¹.

Bevorzugt bedeutet R ein Alkylrest, besonders bevorzugt ein Methylrest.

Bevorzugt bedeutet R¹ ein Wasserstoffatom, Alkylrest, Alkenylrest oder substituierter Kohlenwasserstoffrest, besonders bevorzugt ein Methyl-, Vinyl-, Allyl- oder (Meth)acryloxypropylrest.

Beispiele für die erfindungsgemäßen Organo(poly)siloxane sind solche der Formel

Me₃Si(OSiMe₂)ₘ(OSiMe₂)ₙOH ,

HMe₂Si(OSiMe₂)ₘ(OSiMe₂)ₙOH ,

(H₂C=CH)Me₂Si(OSiMe₂)ₘ(OSiMe₂)ₙOH ,

(H₂C=CHCH₂)Me₂Si(OSiMe₂)ₘ(OSiMe₂)ₙOH ,

(CF₃CH₂CH₂)Me₂Si(OSiMe₂)ₘ(OSiMe₂)ₙOH ,

H₂C=CHC(O)O(CH₂)₃Me₂Si(OSiMe₂)ₘ(OSiMe₂)ₙOH und

H₂C=C(Me)C(O)O(CH₂)₃Me₂Si(OSiMe₂)ₘ(OSiMe₂)ₙOH ,

wobei Me ein Methylrest ist und m und n die oben dafür angegebene Bedeutung haben.

Die erfindungsgemäßen Organo(poly)siloxane besitzen eine Viskosität von vorzugsweise 4 bis 9·10⁵ mPa·s bei 25°C.

Vorzugsweise wird bei dem erfindungsgemäßen Verfahren als Fluorid-Ionen aufweisender Katalysator Alkalimetallfluorid oder an einem Trägermaterial gebundenes Alkalimetallfluorid eingesetzt.

Bei dem im erfindungsgemäßen Verfahren eingesetzten Fluorid-Ionen aufweisenden Katalysator kann es sich um eine einzelne Art wie auch um ein Gemisch aus mindestens zwei verschiedenen Arten derartiger Katalysatoren handeln.

Beispiele für Alkalimetallfluorid sind Kaliumfluorid und Cäsiumfluorid.

Beispiele für Trägermaterial sind Aluminiumoxide, Titandioxide, Zeolithe, Kieselgele, Diatomeenerden und Ionenaustauscherharze.

Bevorzugt wird bei dem erfindungsgemäßen Verfahren an Trägermaterial gebundenes Alkalimetallfluorid, insbesondere an Aluminiumoxid gebundenes Kaliumfluorid, eingesetzt.

An Trägermaterial gebundenes Alkalimetallfluorid wird beispielsweise durch Eindampfen einer Mischung aus Aluminiumoxid und Kaliumfluorid in Wasser, durch Trocknung einer trocken miteinander verriebenen Mischung aus Aluminiumoxid und Kaliumfluorid, oder durch Hydrolyse von Aluminiumtriisopropylat oder Titantetraisopropylat in Gegenwart von Kaliumfluorid hergestellt. Verfahren zur Herstellung von an Trägermaterial gebundenes Alkalimetallfluorid sind in J. Yamawaki et al., Chemistry Letters, Seite 755-758, 1979, und T. Ando et al., Chemistry Letters, Seite 45-46, 1979 beschrieben.

Das erfindungsgemäße Verfahren hat den Vorteil, daß der eingesetzte Katalysator leicht zugänglich und einfach zu handhaben ist, da er beispielsweise an Luft gelagert werden kann. Die Herstellung der erfindungsgemäßen Organo(poly)siloxane unter heterogener Katalyse, d.h. unter Einsatz von an Trägermaterial gebundenes Alkalimetallfluorid, wie an Aluminiumoxid gebundenes Kaliumfluorid, hat den weiteren Vorteil, daß der eingesetzte Katalysator, ein Feststoff, leicht aus der Reaktionsmischung abgetrennt werden kann, beispielsweise durch einfaches Filtrieren.

Bei dem erfindungsgemäßen Verfahren wird Fluorid-Ionen aufweisender Katalysator in Mengen von vorzugsweise 0,01 bis 1 Gew.-%, bevorzugt 0,1 bis 0,5 Gew.-%, jeweils bezogen auf das Gesamtgewicht des eingesetzten Hexaorganocyclotrisiloxans, eingesetzt. An Trägermaterial fixiertes Alkalimetallfluorid wird dabei wegen der geringeren Fluoridkonzentration im Vergleich zum entsprechenden Alkalimetallfluorid in größeren Mengen eingesetzt.

Bei dem erfindungsgemäßen Verfahren wird als Hexaorganocyclotrisiloxan bevorzugt Hexamethylcyclotrisiloxan eingesetzt.

Die Triorganosiloxygruppe am Molekülkettenende des bei dem erfindungsgemäßen Verfahren hergestellten Organo(poly)siloxans wird über das eingesetzte Sil(ox)anol eingeführt. Vorzugsweise wird Triorganosilanol, bevorzugt Trimethylsilanol oder Vinyldimethylsilanol, eingesetzt. Die Einführung beispielsweise der Vinyldimethylsiloxygruppe oder Perfluoralkyldimethylsiloxygruppe kann aufgrund der Instabilität der entsprechenden Silanole über oligomere oder polymere Siloxanole erfolgen. Tetrasiloxanole sind dabei über die Umsetzung von Hexaorganocyclotrisiloxan mit dem entsprechenden Chlorsilan leicht zugänglich (vgl. DE-AS 2 918 312). Ein Beispiel für ein solches Siloxanol ist α-Hydroxy-ω-Vinyldimethylsiloxy-hexamethyltrisiloxan.

Durch Kondensation des eingesetzten Triorganosilanols während der Reaktion oder bei der Lagerung entstandene Disiloxane oder Polysiloxane stören den Verlauf der Reaktion nicht.

Das bei dem erfindungsgemäßen Verfahren eingesetzte Verhältnis von Hexaorganocyclotrisiloxan zu Sil(ox)anol bestimmt die mittlere Kettenlänge des Produkts. Hexaorganocyclotrisiloxan wird vorzugsweise in Mengen von 1 bis 333 Mol, bevorzugt in Mengen von 3 bis 10 Mol, jeweils bezogen auf 1 Mol Sil(ox)anol eingesetzt.

Zur Erhöhung der Selektivität der Reaktion kann das erfindungsgemäße Verfahren in Gegenwart von polarem, aprotischem organischem Lösungsmittel, gegebenenfalls im Gemisch mit unpolarem organischem Lösungsmittel durchgeführt werden. Beispiele für polare, aprotische organische Lösungsmittel sind Aceton, Dimethylformamid, Dimethylsulfoxid, Acetonitril und Essigsäureethylester. Beispiele für unpolare organische Lösungsmittel sind Toluol und Hexan.

Polares, aprotisches organisches Lösungsmittel wird je nach Art des eingesetzten Fluorid-Ionen aufweisenden Katalysators vorzugsweise in Mengen von 0 bis 50 Gew.-%, bevorzugt 5 bis 30 Gew.-%, besonders bevorzugt 5 bis 20 Gew.-%, jeweils bezogen auf das Gesamtgewicht der eingesetzten Organosiliciumverbindungen, eingesetzt.

Unpolares organisches Lösungsmittel kann zur besseren Homogenisierung der Reaktionsmischung in Mengen von bis zu 80 Gew.-%, vorzugsweise 50 bis 70 Gew.-%, jeweils bezogen auf das Gesamtgewicht der eingesetzten Organosiliciumverbindungen, eingesetzt werden.

Zur Erhöhung der Selektivität und Geschwindigkeit der Reaktion können bei dem erfindungsgemäßen Verfahren Phasentransferkatalysatoren aus der Gruppe der quaternären Ammoniumsalze, wie Benzyltriethylammoniumchlorid, Kronenether, wie 18-Krone-6,1,4,7,10,13,16-Hexaoxacyclooctadecan oder Polyethylenglykoldimethylether, oder Zeolithe (Molekularsiebe) und tertiäre Amine, wie 4-Dimethylaminopyridin, N,N-Dimethylcyclohexylamin oder 1,4-Diazabicyclo[2,2,2]octan mitverwendet werden.

Das erfindungsgemäße Verfahren wird vorzugsweise bei einer Temperatur, die oberhalb der Schmelztemperatur der eingesetzten Organosiliciumverbindungen liegt, bevorzugt bei einer Temperatur von 60 bis 80°C durchgeführt, kann bei Verwendung von organischen Lösungsmitteln auch bei tieferer Temperatur durchgeführt werden.

Das erfindungsgemäße Verfahren wird vorzugsweise beim Druck der umgebenden Atmosphäre, also etwa bei 1020 hPa (abs.), durchgeführt, es können aber auch höhere oder niedrigere Drücke angewendet werden.

Die Reaktionszeit beträgt bei dem erfindungsgemäßen Verfahren je nach Reaktionstemperatur, Art und Menge der eingesetzten Organosiliciumverbindungen und Lösungsmittel vorzugsweise 0,25 bis 48 Stunden. Ein Abbruch der Reaktion bei unvollständigem Umsatz ist durch Abkühlen auf Raumtemperatur und/oder Filtrieren über Kieselgel möglich.

### Beispiel 1:

Eine Mischung aus 555 g (2,5 Mol) Hexamethylcyclotrisiloxan, 1500 g Toluol, 51,8 g (0,5 Mol) Trimethylsilanol (technisch, enthält 15 Mol % Hexamethyldisiloxan), 50 g Molekularsieb 0,4 nm (käuflich erwerblich bei der Fa. Merck) und 5 g (0,04 Mol) 4-Dimethylaminopyridin (käuflich erwerblich bei der Fa. Merck) wird auf 40°C aufgeheizt und mit einer Suspension von 1,75 g (0,0077 Mol) Benzyltriethylammoniumchlorid (käuflich erwerblich bei der Fa. Merck) und 0,45 g (0,007 Mol) Kaliumfluorid in 170 ml Dimethylsulfoxid versetzt. Es wird 20 Stunden bei 40°C gerührt, über Kieselgel 60 (käuflich erwerblich bei der Fa. Merck) filtriert, das Filtrat am Rotationsverdampfer bei 30°C und 10 mbar eingeengt und das abgeschiedene Dimethylsulfoxid am Scheidetrichter abgetrennt. Es werden 273 g eines klaren, farblosen Öls erhalten, das nach den Ergebnissen der SFC-Analyse (Supercritical-Fluid-Chromatographie, mit überkritischen CO₂) und des ²⁹Si-NMR-Spektrums die folgende durchschnittliche Formel besitzt:

(CH₃)₃Si[OSi(CH₃)₂]₁₅OH

### Beispiel 2:

Eine Mischung aus 207,2 g (0,93 Mol) Hexamethyltrisiloxan, 300 g Toluol, 9,0 g (0,1 Mol) Trimethylsilanol (destilliert, mindestens 95 %ig), 10 g Molekularsieb 0,4 nm und 1 g (0,0089 Mol) 1,4-Diazabicyclo[2,2,2]octan (käuflich erwerblich bei der Fa. Merck) wird auf 40°C aufgeheizt und mit einer Suspension von 0,35 g (0,0015 Mol) Benzyltriethylammoniumchlorid und 0,09 g (0,0015 Mol) Kaliumfluorid in 34 ml Dimethylsulfoxid versetzt. Es wird 4 Stunden bei 40°C gerührt, über Kieselgel 60 filtriert, das Filtrat am Rotationsverdampfer bei 30°C und 10 mbar eingeengt und das abgeschiedene Dimethylsulfoxid am Scheidetrichter abgetrennt. Es werden 160 g eines Organopolysiloxans erhalten, dessen durchschnittliche Formel sich aus den Daten der SFC-Analyse und des ²⁹Si-NMR-Spektrums ergibt:

(CH₃)₃Si[OSi(CH₃)₂]₂₈OH

### Beispiel 3:

Die Arbeitsweise von Beispiel 2 wird wiederholt mit der Abänderung, daß 111 g (0,5 Mol) Hexamethylcyclotrisiloxan anstelle von 207,2 g Hexamethylcyclotrisiloxan und 2 g (0,017 Mol) 1,4-Diazabicyclo[2,2,2]octan anstelle von 1 g 1,4-Diazabicyclo[2,2,2]octan eingesetzt werden. Es werden 97 g eines Organopolysiloxans der durchschnittlichen Formel erhalten:

(CH₃)₃Si[OSi(CH₃)₂]₁₅OH

### Beispiel 4:

### Vergleichsbeispiel

Die Arbeitsweise von Beispiel 3 wird wiederholt mit der Abänderung, daß 1,4-Diazabicyclo[2,2,2]octan nicht mitverwendet wird. Es werden 88 g eines Öls erhalten mit der durchschnittlichen Formel

(CH₃)₃Si[OSi(CH₃)₂]₁₅OH,

wobei gemäß der SFC-Analytik als Nebenbestandteil 5 Gew.-% eines beidseitig endgestopperten Dimethylpolysiloxans ((CH₃)₃Si[OSi(CH₂)₂]₁₅OSi(CH₃)₃) und 5 Gew.-% eines α,ω-Dihydroxydimethylpolysiloxans (H[OSi(CH₃)₂]₁₅OH) enthalten sind.

### Beispiel 5:

Die Arbeitsweise von Beispiel 3 wird wiederholt mit der Abänderung, daß 1 g (0,0078 Mol) N,N-Dimethylcyclohexylamin anstelle von 2 g 1,4-Diazabicyclo[2,2,2]octan eingesetzt werden. Es wird ein Organopolysiloxan der durchschnittlichen Formel gemäß Beispiel 3 erhalten.

### Beispiel 6:

### Vergleichsbeispiel

Eine Mischung aus 111 g (0,5 Mol) Hexamethylcyclotrisiloxan und 9,0 g (0,1 Mol) Trimethylsilanol (destilliert, mindestens 95 %ig) wird bei 60°C mit einer Suspension von 0,35 g (0,0015 Mol) Benzyltriethylammoniumchlorid und 0,09 g (0,0015 Mol) Kaliumfluorid in 8 g Acetonitril versetzt und 4 Stunden bei 60°C und anschließend 2 Stunden bei 80°C gerührt. Nach Filtration über Kieselgel 60 werden bei 30°C und 10 mbar flüchtige Bestandteile am Rotationsverdampfer entfernt. Es werden 87 g eines Öls mit der durchschnittlichen Formel

(CH₃)₃Si[OSi(CH₃)₂]₁₅OH

erhalten.

### Beispiel 7:

### Vergleichsbeispiel

Eine Mischung aus 111 g (0,5 Mol) Hexamethylcyclotrisiloxan und 9,0 g (0,1 Mol) Trimethylsilanol (destilliert, mindestens 95 %ig) wird bei 60°C mit einer Suspension von 0,1 g (0,0007 Mol) Cäsiumfluorid (käuflich erwerblich bei der Fa. Riedel-de-Haen) in 8 g Acetonitril versetzt. Es wird 15 Minuten bei 60°C gerührt, nach dem Abkühlen über Kieselgel 60 filtriert und es werden bei 30°C und 10 mbar flüchtige Bestandteile am Rotationsverdampfer entfernt. Als Rückstand verbleiben 96 g eines Öls, dessen durchschnittliche Formel sich aus den Daten der SFC-Analyse und des ²⁹Si-NMR-Spektrums ergibt:

(CH₃)₃Si[OSi(CH₃)₂]₁₅OH

### Beispiel 8:

a) Eine Mischung aus 10 g Kaliumfluorid, 15 g neutralem Aluminiumoxid (90-aktiv, neutral, Aktivitätsstufe 1) und 200 ml Wasser wird bis zur Trockne eingedampft. Es werden 25 g eines weißen Pulvers (im folgenden als KF-Al₂O₃ bezeichnet) erhalten.
b) Eine Mischung aus 111 g (0,5 Mol) Hexamethylcyclotrisiloxan und 9,0 g (0,1 Mol) Trimethylsilanol (destilliert, mindestens 95 %ig) wird bei 60°C mit 0,5 g des trägerfixierten Fluorid-Katalysators KF-Al₂O₃, dessen Herstellung oben unter a) beschrieben ist, und 23,2 g Aceton versetzt und 1 Stunde bei 60° gerührt. Nach Filtration über Kieselgel 60 und Abziehen des Lösungsmittels am Rotationsverdampfer bei 30°C und 10 mbar verbleiben 102 g eines klaren, farblosen Öls, dessen durchschnittliche Formel sich aus den Daten der SFC-Analyse und des ²⁹Si-NMR-Spektrums ergibt:

   (CH₃)₃Si[OSi(CH₃)₂]₁₅OH

### Beispiel 9:

Die Arbeitsweise von Beispiel 8 wird wiederholt mit der Abänderung, daß der trägerfixierte Fluorid-Katalysator KF-Al₂O₃ vor der Verwendung 24 Stunden bei Raumtemperatur an Luft gelagert wird und die Mischung nach Zugabe des Katalysators 2 Stunden bei 60°C gerührt wird.

Es wird analog Beispiel 8 dasselbe Siloxan mit derselben Selektivität erhalten.

### Beispiel 10:

Eine Mischung aus 111 g (0,5 Mol) Hexamethylcyclotrisiloxan und 32,4 g des Siloxanols der Formel

(H₂C=CH)(CH₃)₂Si[OSi(CH₃)₂]₃OH

(Herstellung gemäß DE-AS 2 918 312 durch Umsetzung von Hexamethylcyclotrisiloxan mit Vinyldimethylchlorsilan und anschließender Hydrolyse der Monochlorverbindung) wird bei 60°C mit 0,1 g (0,0007 Mol) Cäsiumfluorid und 23,2 g Aceton versetzt und eine Stunde bei 60°C gerührt. Nach Filtration über Kieselgel 60 und Einengen des Filtrats am Rotationsverdampfer bei 30°C und 10 mbar verbleiben 112 g eines flüssigen Organopolysiloxans, dessen durchschnittliche Formel sich aus den Daten der SFC-Analyse, des ¹H-NMR-Spektrums und des ²⁹Si-NMR-Spektrums ergibt:

(H₂C=CH)(CH₃)₂Si[OSi(CH₃)₂]₁₈OH

### Beispiel 11:

Eine Mischung aus 89 g (0,4 Mol) Hexamethylcyclotrisiloxan und 26 g (0,08 Mol) des Siloxanols der Formel

(H₂C=CH)(CH₃)₂Si[OSi(CH₃)₂]₃OH

wird bei 80°C mit 0,08 g (0,00056 Mol) Cäsiumfluorid versetzt und eine Stunde bei 80°C und anschließend eine Stunde bei 100°C gerührt. Nach Filtration über Kieselgel 60 werden 110 g eines klaren Öls erhalten mit der durchschnittlichen Formel

(H₂C=CH)(CH₃)₂Si[OSi(CH₃)₂]₁₈OH ,

wobei gemäß der SFC-Analytik als Nebenbestandteil 7,5 Gew.-% eines beidseitig endgestopperten Dimethylpolysiloxans ((H₂C=CH)(CH₃)₂Si[OSi(CH₃)₂]₁₈OSi(CH₃)₂(CH=CH₂)) und 7,5 Gew.-% eines α,ω-Dihydroxydimethylpolysiloxans (H[OSi(CH₃)₂]₁₈OH) enthalten sind.

### Beispiel 12:

a) Eine Mischung aus 200 g (3,3 Mol) Isopropanol, 20,4 g (0,1 Mol) Aluminiumtriisopropylat (käuflich erwerblich bei der Fa. Merck) und 4,1 g (0,12 Mol) Kaliumfluorid wird innerhalb von 30 Minuten mit 7,2 g (0,4 Mol) Wasser versetzt. Es wird eine Stunde unter Rückfluß gekocht, die flüchtigen Bestandteile werden im Vakuum abgezogen und der weiße feste Rückstand wird bis zur Gewichtskonstanz im Trockenschrank getrocknet. Die Ausbeute beträgt 9,2 g, entsprechend 100 % der Theorie, bezogen auf die theoretische Formel KF-Al₂O₃.
b) Eine Mischung aus 111 g (0,5 Mol) Hexamethylcyclotrisiloxan und 11,4 g (0,07 Mol) Trimethylsilanol (technisch, enthält 45 Gew.-% Hexamethyldisiloxan) wird bei 60°C mit 0,5 g des trägerfixierten Fluorid-Katalysators, dessen Herstellung oben unter a) beschrieben ist, und 23,2 g Aceton versetzt, eine Stunde bei 60°C und weitere zwei Stunden bei 68°C unter Rückfluß gerührt. Nach Filtration über Kieselgel 60 und Abziehen aller flüchtigen Bestandteile am Rotationsverdampfer bei 30°C und 10 mbar verbleiben 100 g eines farblosen, klaren Öls, dessen durchschnittliche Formel sich aus den Daten der SFC-Analyse und des ²⁹Si-NMR-Spektrums ergibt:

   (CH₃)₃Si[OSi(CH₃)₂]₂₂OH

### Beispiel 13:

a) 5 g Kaliumfluorid und 7,5 g neutrales Aluminiumoxid (90-aktiv, neutral, Aktivitätsstufe 1) werden in einer Reibschale miteinander vermischt. Die Mischung wird bis zur Gewichtskonstanz im Trockenschrank getrocknet. Es werden 12,5 g eines weißen Pulvers (im folgenden als KF-Al₂O₃ bezeichnet) erhalten.
b) Eine Mischung aus 111 g (0,5 Mol) Hexamethylcyclotrisiloxan und 11,4 g (0,1 Mol) Trimethylsilanol (80 %ig, techn., getrocknet mit Molsieb 4 A, enthält ca. 20 % Hexamethyldisiloxan) wird bei 60°C mit 0,5 g des trägerfixierten Fluorid-Katalysators KF-Al₂O₃, dessen Herstellung oben unter a) beschrieben ist, und 23,2 g Aceton versetzt und 2 Stunden bei 60°C gerührt. Nach Filtration über Kieselgel 60 und Abziehen des Lösungsmittels am Rotationsverdampfer bei 30°C und 10 mbar verbleiben 100 g eines klaren, farblosen Öls, dessen durchschnittliche Formel sich aus den Daten der SFC-Analyse und des ²⁹Si-NMR-Spektrums ergibt:

   (CH₃)₃Si[OSi(CH₃)₂]₁₅OH

### Beispiel 14:

a) Eine Mischung aus 200 g (3,3 Mol) Isopropanol, 28,4 g (0,1 Mol) Titantetraisopropylat und 5,8 g (0,1 Mol) Kaliumfluorid wird bei 20°C mit 7,2 g (0,4 Mol) Wasser versetzt und 1,5 Stunden auf 80°C erhitzt. Die flüchtigen Bestandteile werden bei 50°C und 10 mbar entfernt und der Rückstand wird bis zur Gewichtskonstanz im Trockenschrank getrocknet. Es werden 9,8 g eines weißen Feststoffes (im folgenden als KF-Al₂O₃ bezeichnet) erhalten.
b) Eine Mischung aus 111 g (0,5 Mol) Hexamethylcyclotrisiloxan und 11,4 g (0,07 Mol) Trimethylsilanol (80 %ig, technisch, getrocknet mit Molsieb 4 A, enthält ca. 20 Gew.-% Hexamethyldisiloxan) wird bei 60°C mit 0,5 g des trägerfixierten Fluorid-Katalysators, dessen Herstellung oben unter a) beschrieben ist, und 23,2 g Aceton versetzt und 3 Stunden bei 68°C gerührt. Nach Filtration über Kieselgel 60 und Abziehen aller flüchtigen Bestandteile am Rotationsverdampfer bei 30°C und 10 mbar verbleiben 91 g eines farblosen, klaren Öls, dessen durchschnittliche Formel sich aus den Daten der SFC-Analyse und des ²⁹Si-NMR-Spektrums ergibt:

   (CH₃)₃Si[OSi(CH₃)₂]₁₅OH

## Patentansprüche

1. Verfahren zur Herstellung von Organo(poly)siloxanen der Formel
R¹R₂Si(OSiR₂)ₘ(OSiR₂)ₙOH,
durch Umsetzung von Hexaorganocyclotrisiloxan der Formel
(R₂SiO)₃
mit Sil(ox)anol der Formel
R¹R₂Si(OSiR₂)ₘOH
wobei R gleich oder verschieden ist, einen einwertigen, gegebenenfalls substituierten Kohlenwasserstoffrest,
R¹ ein Wasserstoffatom oder einen einwertigen, gegebenenfalls substituierten Kohlenwasserstoffrest,
m 0 oder eine ganze Zahl von mindestens 1 und
n eine ganze Zahl von mindestens 3 bedeutet,
in Gegenwart eines polaren, aprotischen organischen Lösungsmittels und in Gegenwart eines Alkalimetallfluorid-Katalysator oder eines an ein Trägermaterial gebundenen Alkalimetallfluorid-Katalysators, mit der Maßgabe, daß, wenn ein Alkalimetallfluorid-Katalysator, der nicht an ein Trägermaterial gebunden ist, eingesetzt wird, ein Phasentransferkatalysator ausgewählt aus der Gruppe bestehend aus quarternären Ammoniumsalzen, Kronenethern, Polyethylenglykoldimethylethern, oder Zeolithen und ein tertiäres Amin mitverwendet wird.

2. Herstellung nach Anspruch 1, dadurch gekennzeichnet, daß als an ein Trägermaterial gebundener Alkalimetallfluorid-Katalysator an Aluminiumoxid gebundenes Kaliumfluorid verwendet wird.

3. Herstellung nach Anspruch 1 oder 2, dadurch gekennzeichnet, daß ein unpolares organisches Lösungsmittel mitverwendet wird.

4. Herstellung nach einem der Ansprüche 1 bis 3, dadurch gekennzeichnet, daß Hexaorganocyclotrisiloxan in Mengen von 1 bis 333 Mol je Mol Sil(ox)anol eingesetzt wird.

5. Herstellung nach einem der Ansprüche 1 bis 4, dadurch gekennzeichnet, daß ein Alkalimetallfluorid-Katalysator oder ein an ein Trägermaterial gebundener Alkalimetallfluorid-Katalysator in Mengen von 0,01 bis 1 Gew.-%, bezogen auf das Gesamtgewicht an eingesetztem Hexaorganocyclotrisiloxan, eingesetzt wird.

6. Herstellung nach einem der Ansprüche 1 bis 5, dadurch gekennzeichnet, daß als Hexaorganocyclotrisiloxan Hexamethylcyclotrisiloxan verwendet wird.

7. Herstellung nach einem der Ansprüche 1 bis 6, dadurch gekennzeichnet, daß als Silanol Trimethylsilanol oder Vinyldimethylsilanol verwendet wird.

8. Herstellung nach einem der Ansprüche 1 bis 6, dadurch gekennzeichnet, daß als Siloxanol solches der Formel
(H₂C=CH)(CH₃)₂Si[OSi(CH₃)₂]₃OH
verwendet wird.

## Claims

1. Process for the preparation of organo(poly)siloxanes of the formula
R¹R₂Si(OSiR₂)ₘ(OSiR₂)ₙOH
by reaction of a hexaorganocyclotrisiloxane of the formula
(R₂SiO)₃
with a sil(ox)anol of the formula
R¹R₂Si(OSiR₂)ₘOH
in which R are identical or different radicals and denotes a monovalent, optionally substituted hydrocarbon radical, R¹ denotes a hydrogen atom or a monovalent, optionally substituted hydrocarbon radical, m denotes 0 or an integer of at least 1 and n denotes an integer of at least 3, in the presence of a polar, aprotic organic solvent and in the presence of an alkali metal fluoride catalyst or an alkali metal fluoride catalyst attached to a support material, with the proviso that, if an alkali metal fluoride catalyst not attached to a support material is employed, then a phase transfer catalyst selected from the group consisting of quaternary ammonium salts, crown ethers, polyethylene glycol dimethyl ethers, or zeolites and a tertiary amine is also used.

2. Preparation according to Claim 1, characterized in that potassium fluoride attached to aluminium oxide is used as alkali metal fluoride catalyst attached to a support material.

3. Preparation according to Claim 1 or 2, characterized in that a non-polar organic solvent is used.

4. Preparation according to one of Claims 1 to 3, characterized in that the hexaorganocyclotrisiloxane is employed in amounts of 1 to 333 mol per mol of sil(ox)anol.

5. Preparation according to one of Claims 1 to 4, characterized in that an alkali metal fluoride catalyst or an alkali metal fluoride catalyst attached to a support material is employed in amounts of 0.01 to 1 % by weight, based on the total weight of hexaorganocyclotrisiloxane employed.

6. Preparation according to one of Claims 1 to 5, characterized in that hexamethylcyclotrisiloxane is used as the hexaorganocyclotrisiloxane.

7. Preparation according to one of Claims 1 to 6, characterized in that trimethylsilanol or vinyldimethylsilanol is used as the silanol.

8. Preparation according to one of Claims 1 to 6, characterized in that the siloxanol used is that of the formula
(H₂C=CH)(CH₃)₂Si[OSi(CH₃)₂]₃OH

## Revendications

1. Procédé de préparation d'organo(poly)siloxanes de formule
R¹R₂Si(OSiR₂)ₘ(OSiR₂)ₙOH,
par réaction d'un hexaorganocyclotrisiloxane de formule :
(R₂SiO)₃
avec du sil(ox)anol de formule
R¹R₂Si(OSiR₂)ₘOH
(formules dans lesquelles les R, identiques ou différents, représentent chacun un reste d'hydrocarbure monovalent, éventuellement substitué; R¹ représente un atome d'hydrogène ou un reste d'hydrocarbure monovalent, éventuellement substitué; m vaut 0 ou est un nombre entier valant au moins 1, et n est un nombre entier valant au moins 3), en présence d'un solvant aprotique polaire et en présence d'un catalyseur à base de fluorure de métal alcalin ou d'un catalyseur à base de fluorure de métal alcalin fixé sur une matière de support, à la condition que, lorsque l'on utilise un catalyseur à base de fluorure de métal alcalin qui n'est pas fixé sur une matière de support, on co-utilise un catalyseur de transfert de phase choisi dans l'ensemble consistant en des sels d'ammonium quaternaire, des éthers-couronnes, des éthers diméthyliques de polyéthylène glycol ou des zéolites et une amine tertiaire.

2. Préparation selon la revendication 1, caractérisée en ce qu'on utilise comme catalyseur, à base d'un fluorure de métal alcalin fixé sur une matière de support, du fluorure de potassium fixé sur de l'oxyde d'aluminium.

3. Préparation selon la revendication 1 ou 2, caractérisée en ce qu'on co-utilise un solvant organique non polaire.

4. Préparation selon l'une des revendications 1 à 3, caractérisée en ce qu'on utilise l'hexaorganocyclotrisiloxane en des quantités de 1 à 333 moles par mole de sil(ox)anol.

5. Préparation selon l'une des revendications 1 à 4, caractérisée en ce qu'on utilise un catalyseur à base de fluorure de métal alcalin ou un catalyseur à base d'un fluorure de métal alcalin fixé sur une matière de support, en des quantités de 0,01 à 1 % en poids, par rapport au poids total de l' hexa-organo-cyclotrisiloxane mis en oeuvre.

6. Préparation selon l'une des revendications 1 à 5, caractérisée en ce qu'on utilise l'hexaméthylcyclotrisiloxane comme hexaorganocyclotrisiloxane .

7. Préparation selon l'une des revendications 1 à 6, caractérisée en ce qu'on utilise comme silanol le triméthylsilanol ou le vinyldiméthylsilanol.

8. Préparation selon l'une des revendications 1 à 6, caractérisée en ce qu'on utilise comme siloxanol un composé de formule :
(H₂C=CH)(CH₃)₂Si(OSi(CH₃)₂)₃OH
